# EUROPEAN PATENT APPLICATION

(11) **EP 1 491 421 A2**
(43) Date of publication of application: **29.12.2004**
(21) Application number: 04014784.5
(22) Date of filing: 24.06.2004
(51) Int. Cl.: B62B 7/06

(54) **Collapsible frame particularly for strollers or the like**

(30) Priority: 25.06.2003 IT MI20031296
(71) Applicant: CAM IL MONDO DEL BAMBINO S.p.A., I-24060 Telgate (Prov. of Bergamo) (IT)
(72) Inventor: Rho, Gianfranco, 24060 Telgate (Prov. of Bergamo) (IT)
(74) Representative: Modiano, Guido, Dr.-Ing.

(57) **Abstract**

A collapsible frame particularly for strollers, prams and the like, comprising a supporting framework (1) that forms two upper front uprights (2) and two lower front uprights (3), which can move with respect to each other, a device for detachable coupling between the front uprights, two rear uprights (5) articulated to the lower front uprights (3), and an assembly for connecting one another the uprights for transition from an open position to a closed position of the framework, and/or vice versa. The particularity of the invention consists in that it comprises means (30) for actuating the coupling device, which can be activated at the upper end of the upper front uprights and means (45) for releasing the connecting assembly, which can be activated in a region that is proximate to the surface on which the framework rests.

## Description

The present invention relates to a collapsible frame of the umbrella-like type, particularly for pushchairs, prams and the like.

As is known, collapsible frames, particularly for strollers, prams and the like, are generally obtained from two front uprights constituted by lower uprights and upper uprights that can move with respect to each other and are provided with a detachable coupling device that can be disengaged in order to close or collapse the dimensions of the frame.

Furthermore a connecting assembly is usually provided and connects the uprights of the stroller so as to achieve the folding step; such connecting assembly is usually provided with a handle in order to perform the release step when the stroller is being closed, said handle being arranged substantially at the level of a central portion of the frame.

To perform closure, usually the release means that connect the frames are operated and at the same time one acts on the release device that allows to fold the connecting assembly.

Performing these maneuvers is generally scarcely practical, since the user has to bend down in order to release the connecting assembly, performing an operation that is particularly awkward, also in view of the fact that the user is normally holding a child in his/her arms.

Furthermore, another problem that is observed with the solution proposed by the prior art consists in that the opening and closure operations are generally relatively awkward, because it is necessary to perform a number of actuations simultaneously, generally in an inconvenient position.

The aim of the invention is to solve the problems described above by providing a collapsible frame, particularly for strollers, prams and the like, which allows to perform closure or compaction of the frame of the stroller and the like while maintaining an upright posture and without having to use both hands.

Within this aim, an object of the invention is to provide a frame that allows to achieve a stable compacted position, with the possibility to reach both the closed position and the open position by positively utilizing the weight of the frame, which in practice facilitates the motion.

Another object of the present invention is to provide a frame that has engagement devices that intervene automatically, thus always having optimum safety conditions for the frame.

Another object of the present invention is to provide a collapsible frame that thanks to its particular constructive characteristics is capable of giving the greatest assurances of reliability and safety in use.

Another object of the present invention is to provide a collapsible frame that can be easily obtained starting from commonly commercially available elements and materials and is also competitive from a merely economical standpoint.

This aim and these and other objects that will become better apparent hereinafter are achieved by a frame particularly for strollers, prams and the like, according to the invention, comprising a supporting framework provided with two upper front uprights and two lower front uprights, which can move with respect to each other, a device for detachable coupling between said front uprights, two rear uprights articulated to said lower front uprights, and an assembly for connecting one another said uprights for transition from an open position to a closed position of said framework, and/or vice versa, characterized in that it comprises means for actuating said coupling device which can be activated at the upper end of said upper front uprights and means for releasing said connecting assembly which can be activated in a region that is proximate to the surface on which said framework rests.

Further characteristics and advantages will become better apparent from the description of a preferred but not exclusive embodiment of a collapsible frame particularly for strollers, prams and the like, illustrated by way of non-limiting example in the accompanying drawings, wherein:
Figure 1 is a schematic front perspective view of the collapsible frame according to the invention;
Figure 2 is a rear perspective view of the frame;
Figure 3 is a side elevation view of the frame;
Figures 4 and 5 are views of the actuation means of the coupling device in two different operating positions;
Figure 6 is a perspective view of the initial step of the closure of the frame;
Figure 7 is a view of an intermediate step of the closure of the frame;
Figure 8 is a schematic view of the frame in the closed or compacted position.

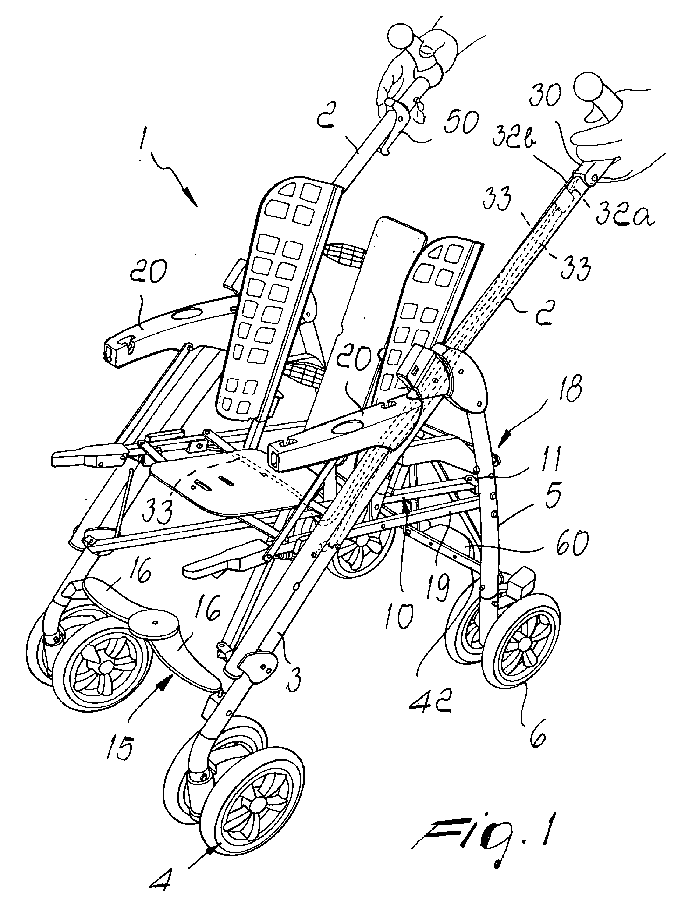

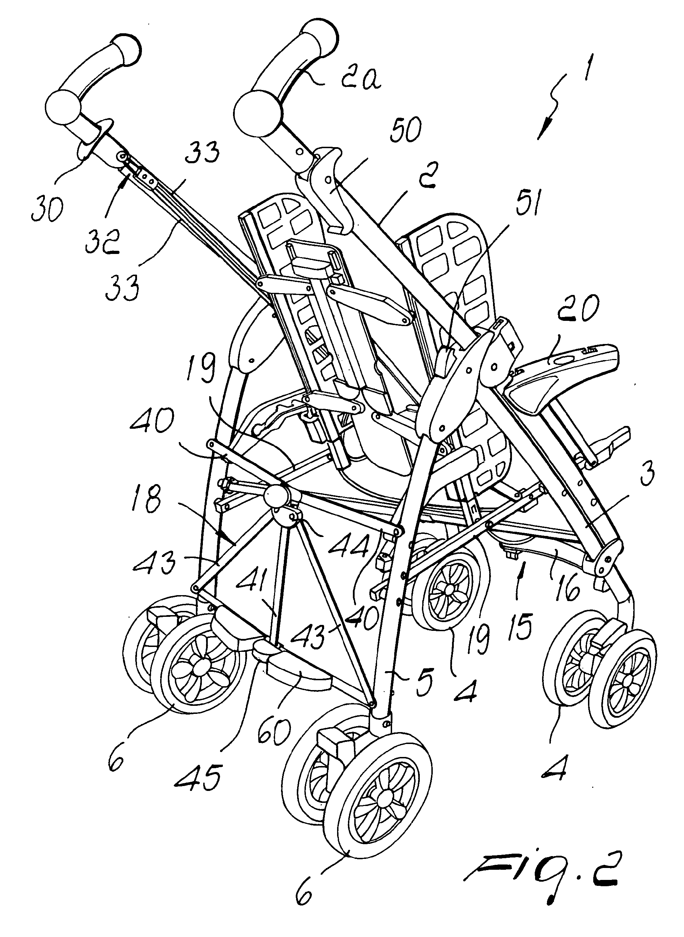

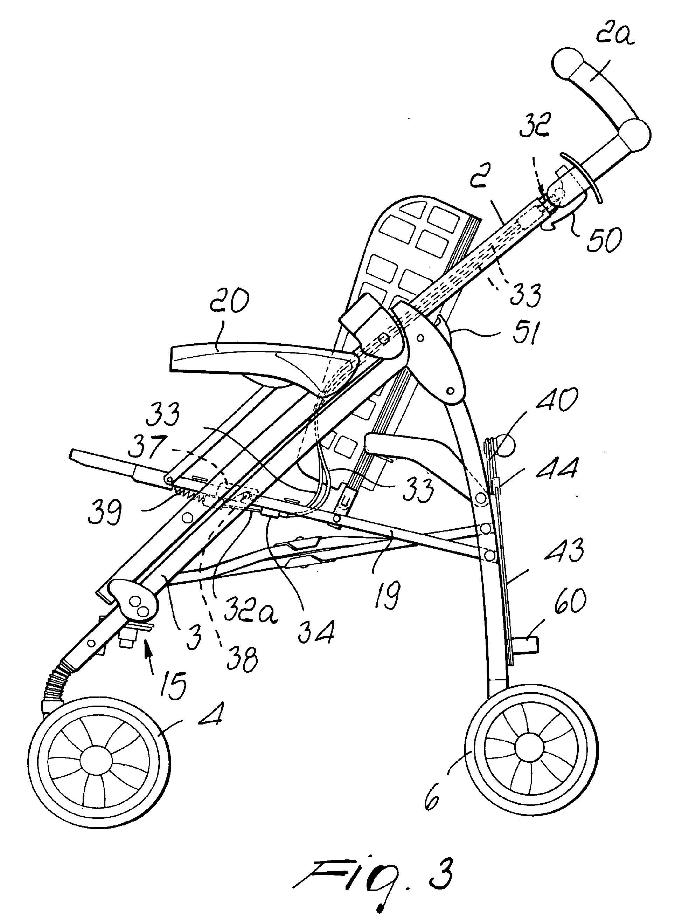

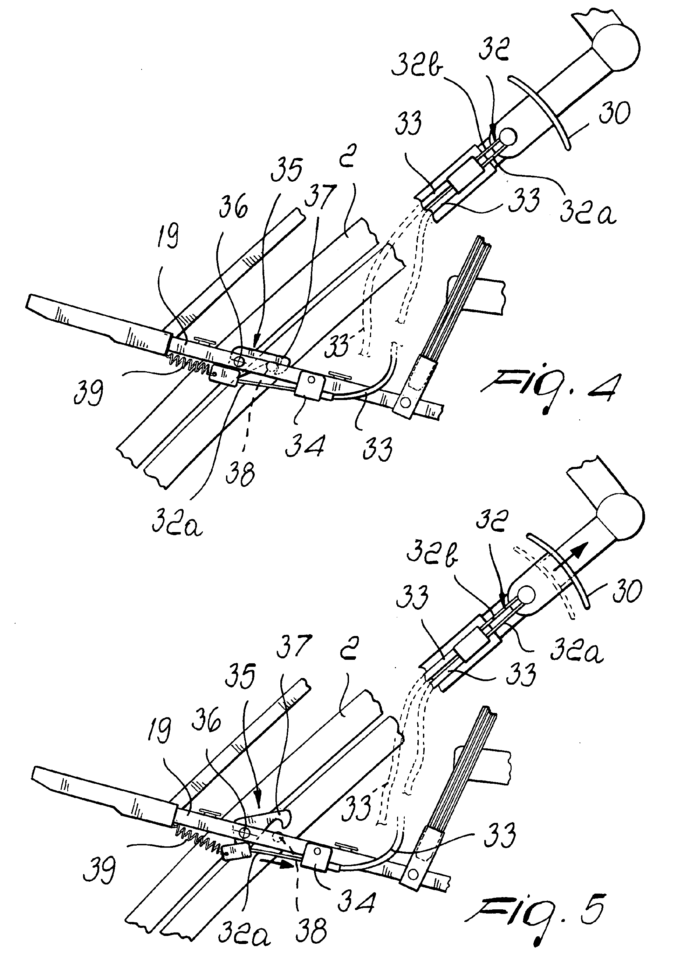

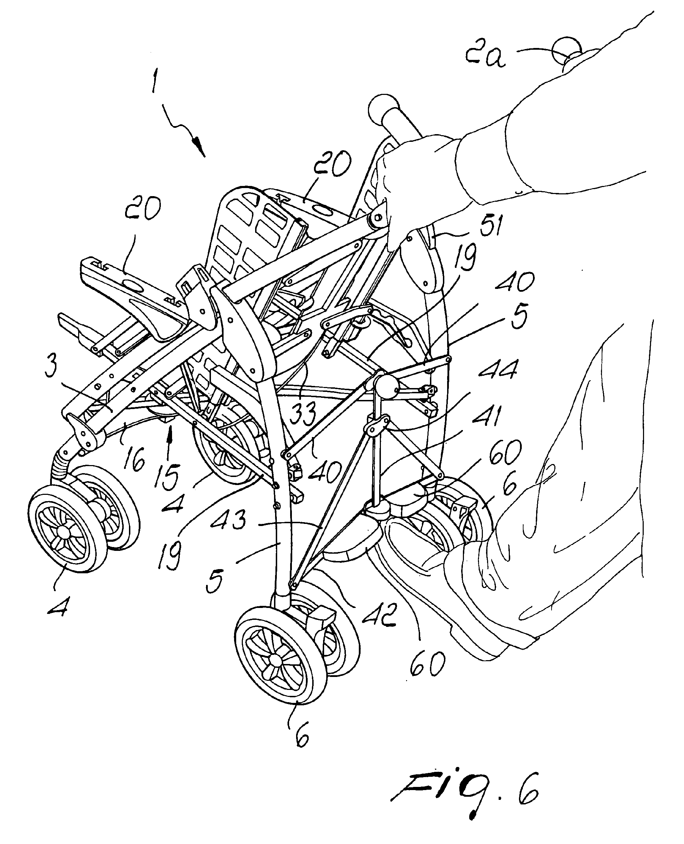

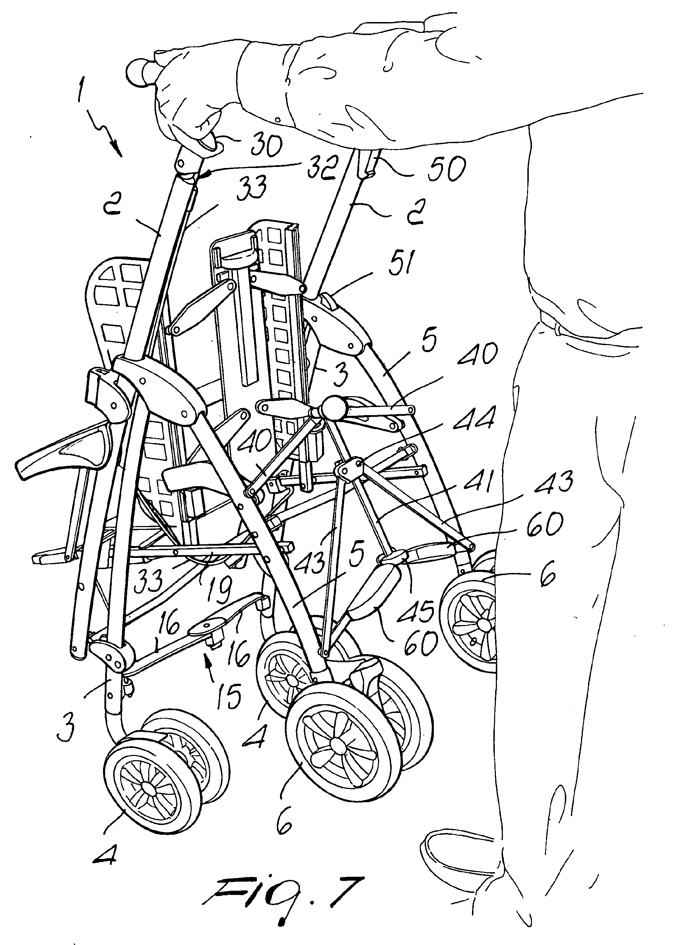

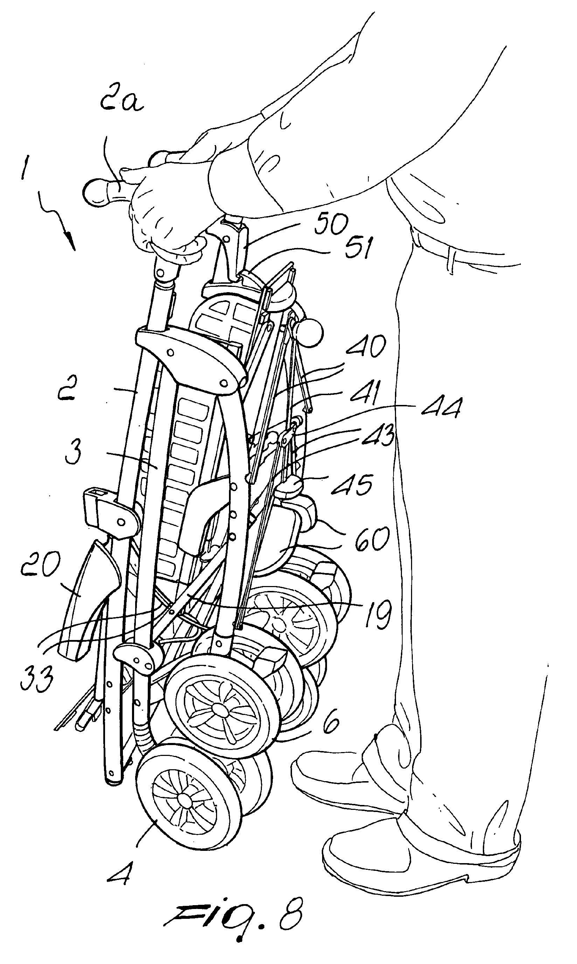

With reference to the figures, the collapsible frame commonly termed of the umbrella-like type, particularly for strollers, prams and the like, according to the invention, comprises a supporting framework, generally designated by the reference numeral 1, which is provided with two upper front uprights 2 that end in an upward region with grip elements 2a that can be optionally of the rotating kind.

The upper front uprights 2 can move with respect to rear front uprights 3, which end with front casters, generally designated by the reference numeral 4.

A detachable coupling device is provided between the uprights 2 and 3 and is described in detail hereinafter.

The upper end of two rear uprights 5, which end with rear casters 6, is articulated to the lower front uprights 3.

The pairs of uprights, which in practice constitute the sides of the frame, are joined by means of an assembly for connecting one another the uprights for transition from an open position to a closed position of the framework and/or vice versa, said assembly being constituted by a central crosspiece 10, whose front ends are articulated to the lower ends of the upper uprights 2 and whose rear ends are articulated by means of a double joint 11 to the rear uprights 5.

There is also a front cross-member 15, which is provided by two arms 16 that are articulated one another at the center and are connected at their outer end to the lower front uprights 3.

The connecting assembly is completed by a rear articulated assembly, generally designated by the reference numeral 18, which is also described in greater detail hereinafter.

The frame is further completed by two lateral cross-members 19, which are articulated between the upper front upright 2 and the rear uprights 5 and act as a connecting element for the seat of the stroller or of the other accessory elements.

Armrests, designated by the reference numeral 20, are further connected to the upper front uprights, and it is possible to connect to said armrests coverings, if used as a stroller, or the bassinet, if used as a pram, or the seat, if the frame is used to support the seat that can be then used in a motor vehicle.

A first important feature of the invention consists in that it has means for actuating the coupling device that can be activated at a single upper end.

In greater detail, the actuation means are provided with a slider 30, which is arranged at the upper ends of one of the uprights 2, can slide along said upright, and engages a central portion of a cable 32, the two lengths whereof can slide in respective sheaths 33 connected to retention blocks 34 provided on the lateral cross-members 19 in order to actuate the detachable coupling device between the front uprights.

In greater detail, the detachable coupling device is provided with a hook 35, which is pivoted in a central portion thereof to the pivot 36 that pivots the lateral cross-members 19 to the respective uprights 2.

The hook 35 has a pawl-like portion 37, which can engage a pin 38 provided on each one of the lower uprights 3.

In locking conditions, the hook-like element 35, by the action of the return spring 39 that acts between the hook-like element and the point of the lateral cross-member 19, is kept engaged with the corresponding pin 38.

To perform release, it is sufficient to activate the slider 30, which acts on the central portion of the cable 32, whose two lengths, designated by the reference numerals 32a and 32b respectively, act on corresponding hooks 35 arranged on the sides of the framework.

Traction on the cable 32 produces a rotation of the hook 35 in contrast with the spring 39, consequently disengaging the pawl 37 from the pin 38 on both sides of the framework.

Moreover, to perform closure, means for releasing the connecting assembly are also provided, which act at the rear articulated assembly provided by means of two upper arms 40, which are pivoted between the rear uprights 5, are articulated each other at the central end and are connected to a strut 41, which is articulated at the other end to the central articulation point of two lower arms 42, which are also articulately connected to the rear uprights 5.

Inclined arms 43 are also provided, which are articulated between the outer ends of the lower arms 42 and a guiding element 44 that slidingly engages the strut 41.

The release means are provided by means of a central plate 45, which is connected to the strut 41 and is arranged in a region that is proximate to the surface that supports the framework so as to provide, by means of the user's foot, release by lifting the point of mutual pivoting between the arms 40, which in closure conditions are arranged so that any action that tends to close the stroller is contrasted by their mutual jamming.

By acting on the plate 45, the dead center is passed, consequently allowing rotation of the arms of the rear articulated assembly and closure of the stroller by means of the articulated elements described earlier.

With the described solution, to close the stroller from the open position it is sufficient to actuate the slider 30 with one hand, with consequent disengagement of the coupling device provided by the hooks 35; at the same time, actuation is performed with the foot at the lower end of the strut 41, which by moving beyond the pivoting dead center of the upper arms 40 allows the mutual rotation of the arms and of the entire connecting assembly, which moves the sides of the stroller closer together and at the same time turns the rear uprights, which move toward the front uprights, thus obtaining a compacted position.

In the closed position, a closure hook 50, provided on one of the upper uprights, automatically engages a complementary hook 51 provided on the rear uprights, therefore stabilizing the closed position.

Closure is performed by the user while keeping an upright position and by performing the transition from the open position to the closed position by simply applying, once the slider 30 has been actuated and the strut has been lifted with passage of the upper arms beyond the dead center, a compressing action, which by achieving in practice the mutual sliding of the upper front uprights and the rear front uprights, actuates all the articulations that move the frame into the compacted position.

To reopen the frame, it is sufficient to act on the closure hook 50 and obtain, simply by way of the frame's own weight, the initial step of descent with final positioning, which can be performed by utilizing the resting plates 60 connected to the lower arms 42 of the rear articulated assembly, in order to move the arms into the locking position and accordingly into a stable position, also thanks to the fact that at the same time the pawl-like part 37 of the hook 35 couples to the pins 38.

From what has been described above it is therefore evident that the invention achieves the intended aim and objects, and in particular the fact is stressed that a collapsible frame is provided which allows to perform opening and closure with particularly simple operations and especially while keeping an upright posture thanks to the fact that the uncoupling of the frames is achieved by means of a slider that is arranged at the upper end of the upper front uprights and the release of the connecting assembly can be provided simply by utilizing the tip of the foot that lifts the strut that makes the rear arms move beyond the articulation dead center.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application no. MI2003A001296, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A collapsible frame particularly for strollers, prams and the like, comprising a supporting framework provided with two upper front uprights and two lower front uprights, which can move with respect to each other, a device for detachable coupling between said front uprights, two rear uprights articulated to said lower front uprights, and an assembly for connecting one another said uprights for transition from an open position to a closed position of said framework, and/or vice versa, **characterized in that** it comprises means for actuating said coupling device which can be activated at the upper end of said upper front uprights and means for releasing said connecting assembly which can be activated in a region that is proximate to the surface on which said framework rests.

2. The frame according to claim 1, **characterized in that** said means for actuating the coupling device comprise a slider that is arranged at the upper end of one of said upper front uprights.

3. The frame according to the preceding claims, **characterized in that** it comprises a cable in which the central portion is engaged with said slider and forms two lengths that can slide in respective sheaths for connection to retention blocks supported on the lateral cross-members of said frame, the lengths of said cables engaging a hook that is pivoted to a pivot in a central portion.

4. The frame according to one or more of the preceding claims, **characterized in that** said pivot for supporting said hook is adapted to hinge one another said lateral cross-members and said upper front uprights.

5. The frame according to one or more of the preceding claims, **characterized in that** said hook has a pawl-like portion that can engage a pin provided on the corresponding lower front upright.

6. The frame according to one or more of the preceding claims, **characterized in that** it comprises a return spring, which acts between said hook-like element in order to keep it engaged with said pin and a point of the corresponding lateral cross-member.

7. The frame according to one or more of the preceding claims, **characterized in that** said connecting assembly comprises a rear articulated assembly, which is provided with two upper arms that are pivoted between said rear uprights and are articulated to the upper end of a strut, which is articulated at its lower end to the articulation point of two lower arms connected to said rear uprights, said means for releasing the interconnection assembly being provided with a central plate, which is connected to said strut in order to move, by way of a pushing action applied to said strut, beyond the dead center of the mutual pivoting of said upper arms.

8. The frame according to one or more of the preceding claims, **characterized in that** it comprises a closure engagement element, which is provided on one of said upper front uprights and can detachably engage a complementary hook that is formed on said rear uprights and is associable with said closure hook when said frame is in the closure position.

9. The frame according to one or more of the preceding claims, **characterized in that** it can be closed while keeping an upright posture and by using a single hand.
